# EUROPÄISCHE PATENTSCHRIFT

(11) **EP 1 629 637 B1**
(45) Veröffentlichungstag und Bekanntmachung des Hinweises auf die Patenterteilung: **25.10.2006**
(21) Anmeldenummer: 04735157.2
(22) Anmeldetag: 28.05.2004
(51) Int. Cl.: H04L 12/46, H04L 12/40

(54) **ÜBERTRAGUNG VON NACHRICHTEN IN EINEM VERTEILTEN, ZEITGESTEUERTEN ECHTZEITSYSTEM**
TRANSMISSION OF MESSAGES IN A DISTRIBUTED, TEMPORALLY CONTROLLED REAL TIME SYSTEM
TRANSMISSION DE MESSAGES DANS UN SYSTEME TEMPS REEL TEMPORISE DISTRIBUE

(30) Priorität: 30.05.2003 AT 8442003
(43) Veröffentlichungstag der Anmeldung: 01.03.2006
(73) Patentinhaber: FTS Computertechnik Ges.mbH, 2500 Baden-Siegenfeld (AT)
(72) Erfinder: KOPETZ, Hermann, A-2500 Baden bei Wien (AT)
(74) Vertreter: Patentanwaltskanzlei Matschnig
(86) Internationale Anmeldenummer: PCT/AT2004/000189
(87) Internationale Veröffentlichungsnummer: WO 2004/107670

(56) Entgegenhaltungen:
- EP-A- 1 158 718
- WO-A-02/099643
- MIZUNUMA I ET AL: "Middleware for distributed industrial real-time systems on ATM networks" REAL-TIME SYSTEMS SYMPOSIUM, 1996., 17TH IEEE LOS ALAMITOS, CA, USA 4-6 DEC. 1996, LOS ALAMITOS, CA, USA,IEEE COMPUT. SOC, US, 4. Dezember 1996 (1996-12-04), Seiten 32-38, XP010208892 ISBN: 0-8186-7689-2

## Beschreibung

Die Erfindung betrifft ein Verfahren zur Übertragung von Nachrichten in einem verteilten zeitgesteuerten Echtzeitcomputersystem, welches aus einer Vielzahl von Rechnerknoten besteht, wobei jeder Rechnerknoten einem oder mehreren Clustern angehört, und wo in unterschiedlichen Clustern unterschiedliche Kommunikationsprotokolle eingesetzt werden können, und wo die Kommunikation zwischen zwei unterschiedlichen Clustern über Rechnerknoten realisiert wird, die physikalisch Mitglied der beiden zu verbindenden Cluster sind (physikalischer Gateway), und wo mehrere Untermengen der Rechnerknoten mehrere nahezu autonome Applikationssubsysteme bilden, wobei die Rechnerknoten einer Untermenge unterschiedlichen Clustern angehören können.

Weiters betrifft die Erfindung ein verteiltes zeitgesteuertes Echtzeitcomputersystem, welches aus einer Vielzahl von Rechnerknoten besteht, wobei jeder Rechnerknoten einem oder mehreren Clustern angehört, und wo in unterschiedlichen Clustern unterschiedliche Kommunikationsprotokolle eingesetzt werden können, und wo die Kommunikation zwischen zwei unterschiedlichen Clustern über Rechnerknoten realisiert ist, die physikalisch Mitglied der beiden zu verbindenden Cluster sind (physikalischer Gateway), und wo mehrere Untermengen der Rechnerknoten mehrere nahezu autonome Applikationssubsysteme bilden, wobei die Rechnerknoten einer Untermenge unterschiedlichen Clustern angehören können.

Der Begriff *nahezu autonom* entspricht dabei dem englischen Fachausdruck *nearly autonomous* oder *nearly decomposable.* Dieser Term besagt, dass die internen Wechselwirkungen innerhalb eines (Applikations)subsystems wesentlich stärker sind als die Wechselwirkungen nach Außen.

Im weiteren Text wird auf folgende Literatur Bezug genommen:
[1] AT Patentanmeldung 429/2001 vom 19.3.2001 (AT-Patent 410491, bekanntgemacht am 15. September 2002): Kommunikationsverfahren zur Realisierung von Ereigniskanälen in einem zeitgesteuerten Kommunikationssystem.
[2] Kopetz, H. (1997). Real-Time Systems, Design Principles for Distributed Embedded Applications; ISBN: 0-7923-9894-7. Boston. Kluwer Academic Publishers.
[3] LIN. Local Interconnect Network Press Announcement, SAE World Congress. in www.lin.org. 2000. Detroit.
[4] Tindell, K., Analysis of Hard Real-Time Communications. Real-Time Systems, 1995. 9(2): p. 147-171.
   Die Druckschrift EP1158718 beschreibt ein Netzwerk in einem Auto in dem verschiedene Funktionen innerhalb von virtuellen Netzwerken ausgeführt werden.

Viele elektronischen Steuer- und Regelsysteme, zum Beispiel in einem Auto, bestehen aus einer Vielzahl von kooperierenden Rechnerknoten, die über unterschiedliche Bussysteme (z.B. TTP, CAN, LIN, MOST) kommunizieren. Es entspricht dem heutigen Stand der Technik, dass jeder wesentlichen Funktion eine eigene Steuereinheit (Electronic Control Unit― ECU), d.i. ein eigener physikalischer Rechnerknoten, zugewiesen wird und dass unterschiedlichen Applikationssubsystemen (z.B. Bordelektronik, Antriebsstrang, Multi-Media Kommunikation) dedizierte physikalische Busverbindungen zugeordnet sind. Die mit der zunehmenden Zahl der Funktionen zunehmende Zahl der ECUs und Kabelverbindungen bedingen hohe Kosten auf dem Gebiet der Hardware, Installation und Wartung und eine Reduktion der Zuverlässigkeit, da die Wahrscheinlichkeit von Kontaktfehlem mit der Zunahme der Anzahl der Kontakte steigt. Einer Integration von mehreren nahezu unabhängigen Applikationssubsystemen, die von unterschiedlichen Sublieferanten geliefert werden, in ein einziges physikalisches verteiltes System steht die Zunahme der Komplexität, die durch unbeabsichtigte Wechselwirkungen der Subsysteme hervorgerufen werden kann, und die damit verbunden Probleme bei der Abgrenzung der Verantwortlichkeiten der Sublieferanten im Fehlerfall im Wege.

Es ist eine Aufgabe der Erfindung, die genannten Probleme zu lösen.

Diese Aufgabe wird mit einem eingangs erwähnten dadurch gelöst, dass losgelöst von der physikalischen Multiclusternetzwerkstruktur eine virtuelle Netzwerkstruktur mit einem oder mehreren virtuellen Kommunikationskanälen derart aufgebaut wird, dass den Rechnerknoten eines verteilten Applikationssubsystems je mindestens ein virtueller Kommunikationskanal mit einem einheitlichen die Clustergrenzen überschreitenden Namensraum zur Verfügung gestellt wird, innerhalb dessen ein einheitliches virtuelles Kommunikationsprotokoll mit a priori bekannten Echtzeiteigenschaften realisiert ist und innerhalb dessen eine virtuelle Broadcast-Kommunikation unterstützt wird.

Entsprechend wird die Aufgabe mit einem eingangs genannten Echtzeitcomputersystem gemäss dem Anspruch 10 und einem entsprechenden Verfahren gemäss dem Anspruch 1 gelöst.

Unter einer Echtzeiteigenschaft eines Kommunikationssystems versteht man dabei beispielsweise, dass die Übertragung einer Nachricht vom Sender zum Empfänger innerhalb eines vorgegebenen Echtzeitintervalls durchgeführt wird. Eine weitere beispielhafte Echtzeiteigenschaft betrifft die Fehlererkennung: ein Fehler, z.B. der Verlust einer Nachricht, muss innerhalb eines vorgegebenenEchtzeitintervalls erkannt werden.

Die rasanten Fortschritte auf den Gebieten der Computerhardware und der Kommunikationstechnik schaffen ein technologisches Umfeld, das eine Lösung der angesprochen Probleme ermöglicht. Die steigende Rechenleistung der Prozessoren und die zunehmende Bandbreite der Kommunikationssysteme bilden die Voraussetzung für eine stärkere Integration der Applikationssubsysteme und der damit verbundenen Reduktion der Anzahl der ECUs und der physikalischen Übertragungsleitungen. Es muss durch geeignete Architekturmechanismen in der Middleware sichergestellt werden, dass zwischen unabhängigen Applikationssubsystemen im Fahrzeug keine unbeabsichtigten Wechselwirkungen im Werte oder Zeitbereich auftreten können, auch wenn Prozessoren und physikalische Kommunikationskanäle gemeinsam genutzt werden. Losgelöst von der gegebenen physikalischen Struktur der Hardware und der Kommunikation sind virtuelle Cluster aufzubauen, die den verteilten Anwendungen mehrere verteilte in sich abgekapselte Ausführungsräume bereitstellen. Da die Fehlererkennung und Fehlerisolation durch generische Architekturmechanismen vorgenommen wird, kann sich die Anwendungsentwicklung voll auf ihre eigentliche Aufgabe, der Entwicklung der Anwendungssoftware, konzentrieren. Der Aufbau eines abgekapselten Ausfühnzngsraums für ein Applikationssubsystem muss auf zwei Ebenen erfolgen, der Ebene der Verarbeitung und der Ebene der Kommunikation. Auf der Ebene der Verarbeitung sind Betriebssysteme einzusetzen, die eine strikte Trennung der innerhalb eines Rechnerknotens auszuführenden Rechnertasks garantieren. Die vorliegende Erfindung befasst sich mit einer strikten Trennung der verteilten Subsysteme im Bereich der Kommunikation.

Bei der vorliegenden Erfindung werden somit innerhalb eines verteilten Echtzeitsystems mehrere autonome virtuelle Kommunikationskanäle aufgebaut, wobei jeder dieser virtuellen Kommunikationskanäle, losgelöst von der vorhandenen physikalischen Struktur der gegebenen unterschiedlichen Kommunikationssysteme, einem Applikationssubsystem.ein einheitliches unabhängiges abgekapselte virtuelles Kommunikationssystem mit *a priori* bekanntem Echtzeitverhalten zur Verfügung stellt.

Konkrete, vorteilhafte Ausführungsformen des erfindungsgemäßen Verfahrens bzw. des genannten Echtzeitcomputersystems sind in den Unteransprüchen beschrieben. Insbesondere ist vorgesehen, dass in einem Rechnerknoten mehrere Tasks realisiert sind, die unterschiedlichen verteilten Applikationssubsystemen zugeordnet und voneinander isoliert sind, und wo allen Tasks eines bestimmten verteilten Applikationssubsystems, auch wenn sie sich in unterschiedlichen Rechnerknoten und möglicherweise in unterschiedlichen Clustern befinden, ein einheitlicher virtueller Kommunikationskanal mit einer einheitlichen Kommunikationsprotokoll-schnittstelle zugewiesen wird.

Außerdem kann vorgesehen sein, dass in den zeitgesteuerten Kommunikationssystemen die verschiedenen virtuellen Kommunikationskanäle voneinander derart isoliert werden, dass eine Änderung im Verkehrsaufkommen in einem virtuellen Kommunikationskanal keine Auswirkungen auf das zeitliche Verhalten des Verkehrs in den anderen virtuellen Kommunikationskanälen hat.

Vorteilhaft ist es auch, wenn in einem zeitgesteuerten Kommunikationssystem mehrere voneinander abgekapselte virtuelle Kommunikationskanäle für den Transport von Ereignisnachrichten bereitgestellt werden.

Zweckmäßigerweise erfolgt der Datenaustausch zwischen unterschiedlichen virtuellen Kommunikationskanälen über ein virtuelles Gateway.

Außerdem ist es günstig, wenn einer oder mehrere der virtuellen Kommunikationskanäle die CAN Kommunikationsprotokollschnittstelle emuliert.

Von Vorteil ist es auch, wenn in einem Multiclustersystem die Rechnerknoten von einem oder mehreren zentralen zeitgesteuerten Clustern Gatewayverbindungen zu den Rechnerknoten in einem oder mehreren physikalischen CAN Clustern herstellen und wo innerhalb der zeitgesteuerten Cluster ein oder mehrere virtuelle CAN Kommunikationskanäle emuliert werden, und wo ein semi-virtueller CAN Kommunikationskanal aus der Kombination von den an einem Applikationssubsystem beteiligten Rechnertasks eines oder mehrerer physikalischer CAN Cluster und von den an demselben Applikationssubsystem beteiligten Rechnertasks eines oder mehrerer virtueller CAN Kommunikationskanäle besteht.

Weiters zweckmäßig ist es, wenn in einem Multiclustersystem alle Rechnertasks ihre Diagnosenachrichten über einen einheitlichen virtuellen Diagnosekanal an einen Diagnoseknoten senden können.

Vorgesehen kann schließlich auch noch sein, dass die Rechnertasks bereits vor dem Auftreten eines Fehlers out-of-norm Diagnosenachrichten über den virtuellen Diagnosekanal an den Diagnoseknoten senden.

Im Folgenden ist die Erfindung an Hand der Zeichnung näher erläutert. In dieser zeigt
Fig. 1 die Struktur eines verteilten Multicluster-Computersystems, welches aus fünf physikalischen Clustern besteht,
Fig. 2 die Struktur eines Rechnerknotens mit vier Tasks für unterschiedliche Applikationssubsystemen, und
Fig. 3 die Struktur des verteilten Multicluster Computersystems von Fig. 1, in dem zwei virtuelle Cluster eingetragen sind.

Die Erfindung wird am Beispiel eines verteilten Echtzeitcomputersystems mit fünf physikalischen Clustern erläutert.

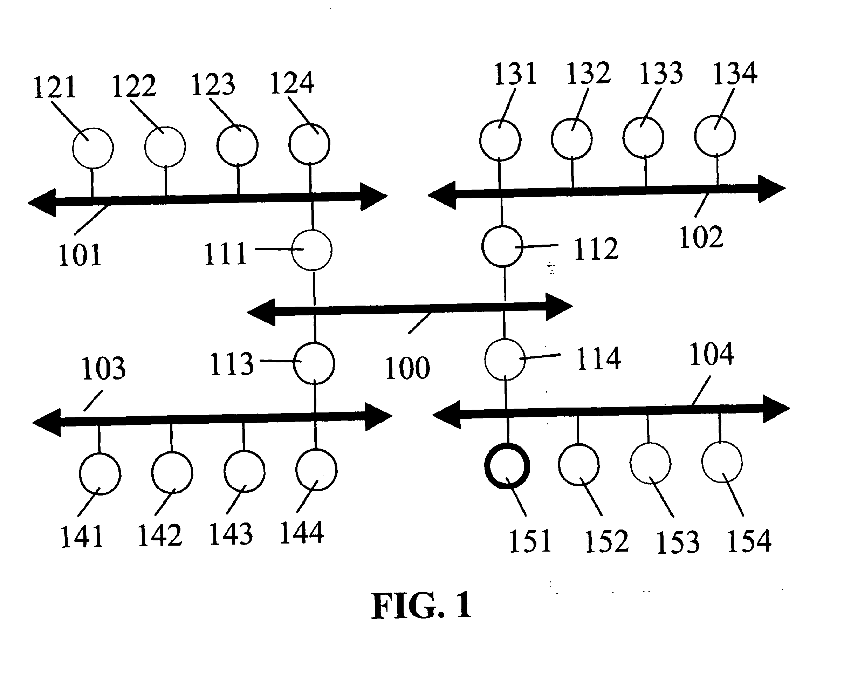

In Fig. 1 sind die fünf physikalischen Cluster 100, 101, 102, 103 und 104 erkennbar. Im Cluster 101 und 104 sei beispielsweise das CAN Protokoll realisiert (siehe [2], S. 161), im Cluster 100 beispielsweise das TTP Protokoll (siehe [2], S.172) und in den Clustern 102 und 103 beispielsweise das LIN Protokoll (siehe [3]). Das Cluster 101 verbindet die fünf Rechnerknoten 121, 122, 123, 124 und 111. Das gleiche gilt für die Rechnerknoten in den anderen vier Clustern 100, 102, 103, und 104. Die Rechnerknoten 111, 112, 113 und 114 sind Gatewayknoten, die zwei Cluster miteinander verbinden. Rechnerknoten 151 ist ein ausgezeichneter Rechnerknoten, der Diagnoseknoten. Er speichert die Fehlermeldungen aller übrigen Rechnerknoten und erstellt eine on-line Fehlerstatistik.

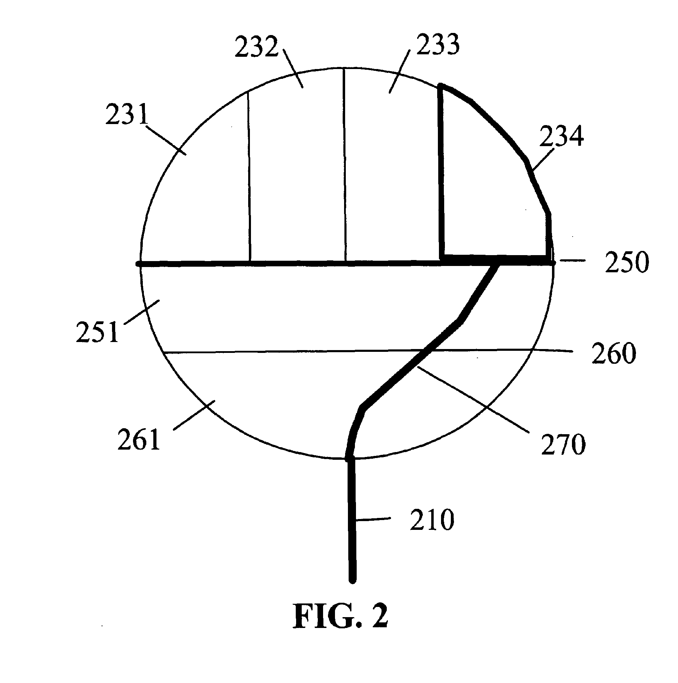

Fig. 2 zeigt den inneren Aufbau eines Rechnerknotens, z.B. des Rechnerknotens 121. Die physikalische Verbindung 210 verbindet den Rechnerknoten 121 mit dem Kommunikationskanal 101. Im Rechnerknoten 121 befindet sich ein Betriebssystem 261. Über dem Betriebssystem 261 liegt eine standardisierte Schnittstelle 260 für die Middleware 251. Die Middleware 251 stellt den Applikationstasks 231, 232, 233 und 234 je ein definiertes Application Program Interface (API) zur Verfügung. Im konkreten Beispiel wird angenommen, dass die vier Applikationstasks 231, 232, 233 und 234 vier unterschiedlichen Applikationssubsystemen angehören. Das Betriebssystem 261 und die Middleware 251 stellen sicher, dass jeder Applikationstask unabhängig von jedem anderen Applikationstask ausgeführt werden kann. Dies kann entsprechend dem Stand der Technik z.B. dadurch erreicht werden, dass der Speicherbereich eines Applikationstasks disjunkt ist vom Speicherbereich der anderen Applikationstasks und eine statische Schedulingstrategie (siehe [2], S. 238) in der zentralen Recheneinheit implementiert ist. Ein Sende- oder Empfangsbefehl wird über das virtuelle Link 270 durch die Mittelware 251 und das Betriebssystem 261 an die Verbindung 210 zum physikalischen Kommunikationssystem geleitet. Die Middelware nimmt eine eventuell notwendige Namensübersetzung vor und überprüft, ob der Task 234 seine zeitliche Spezifikation einhält. Wenn die zeitliche Spezifikation nicht eingehalten wird, wird von der Middleware eine Fehlermeldung an den Diagnoseknoten 151 gesendet.

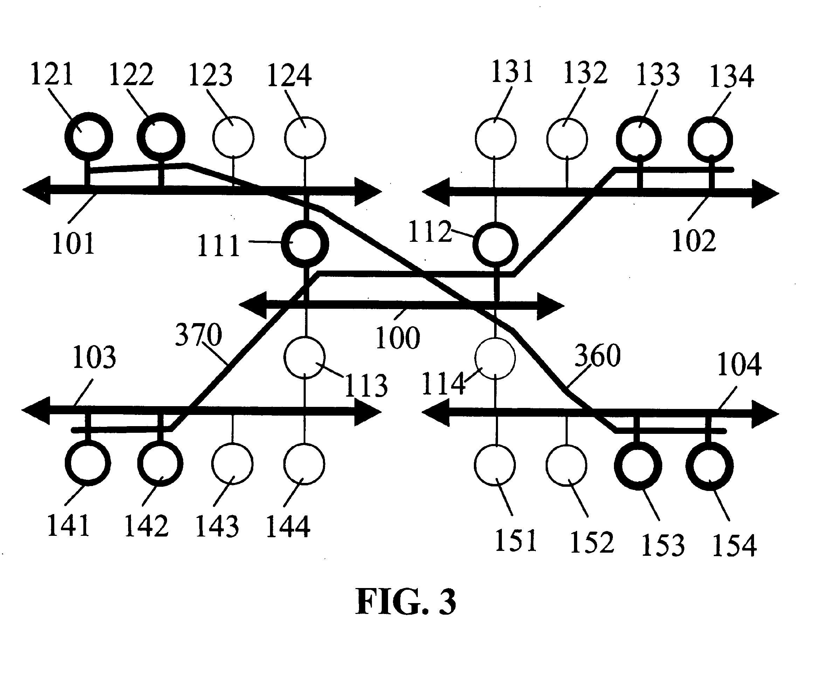

Fig. 3 zeigt das verteilte System von Fig. 1 mit zwei Applikationssubsystemen 360 und 370 und den entsprechenden virtuellen Cluster 360 und 370. Dem virtuellen Cluster 360 gehören die physikalischen Rechnerknoten 111, 121, 122, 153, und 154 an. Dem virtuellen Cluster 370 gehören die physikalischen Rechnerknoten 111, 112, 133, 134, 141und 142 an. Ein Task von Rechnerknoten 111, der Task 234, gehört zum Cluster 360, während ein anderer Task von Rechnerknoten 111, der Task 233 dem Cluster 370 angehört. Je ein Task der Rechnerknoten 111, 121,122, 153, und 154 bilden das verteilte Applikationssubsystem 360. Task 233 von Rechnerknoten 111 realisiert mit je einem Task der Rechnerknoten 112, 122, 133, 134, 141 und 142 ein vom Applikationssubsystem 360 unabhängiges verteiltes Applikationssubsystem 370. Das Betriebssystem von Rechnerknoten 111 isoliert die Tasks 231, 232, 233 und 234 voneinander. Die Middleware der Rechnerknoten 111, 121, 122, 153, und 154 stellt den Applikationstasks des verteilten Applikationssubsystems 360 eine einheitliche virtuelle Kommunikationsprotokollschnittstelle, z.B. auf der Basis einer CAN API zur Verfügung. Innerhalb des verteilten virtuellen Applikationssubsystems 360 funktioniert eine Broadcastkommunikation wie auf einem physikalischen CAN Bus. Die Middleware der Rechnerknoten 111, 112, 133, 134, 141 und 142 stellt den Applikationstasks des verteilten Applikationssubsystems 370 ein einheitliches virtuelle Kommunikationsprotokollschnittstelle, z.B. auf der Basis einer TTP API zur Verfügung. Die Middleware isoliert das Applikationssubsystem 360 vom Applikationssubsystem 370 um sicherzustellen, dass eine Änderung im Applikationssubsystem 360 keine Auswirkungen auf das Verhalten des Applikationssubsystems 370 hat und umgekehrt. Wenn zwischen dem Applikationssubsystem 360 und dem Applikationssubsystem 370 ein Datenaustausch erforderlich ist, so kann dieser Datenaustausch über einen virtuelle Gateway in der Middleware des Knotens 111 erfolgen.

Die physikalische Verdrahtung bestimmt die physikalische Struktur eines Systems. Beispielsweise zeigt Fig. 1 ein Multiclustersystem mit fünf physikalischen Clustern 100,101,102, 103, 104. In Fig. 3 sind zwei virtuelle Cluster 360 und 370 angeführt, die auf die physikalische Struktur von Fig. 1 aufgesetzt sind. Fig. 3 zeigt, dass die Struktur der virtuellen Cluster losgelöst ist von der Struktur der physikalischen Cluster. Obwohl die Knoten 121 und 153 des virtuellen Clusters 360 in unterschiedlichen physikalischen Clustern angeordnet sind, gehören sie zu einem einzigen virtuellen einheitlichen Namensraum.

Es ist eine wesentliche Eigenschaft dieser Erfindung, dass ein virtueller Kommunikationskanal einen einheitlichen die Clustergrenzen überschreitenden Namensraum anbietet. Dadurch wird erreicht, dass z.B. ein Task des Applikationssystems 360 von einem Knoten im Cluster 101 zu einem Knoten im Cluster 104 verschoben werden kann, ohne die Adressierung innerhalb des Applikationssubsystems ändern zu müssen.

Entsprechend Fig. 1 können in einem Multiclustersystem die Rechnerknoten 111 und 113 von einem zentralen zeitgesteuerten Cluster 100 Gatewayverbindungen zu den beiden physikalischen CAN Clustern 101 und 103 herstellen. Innerhalb des zeitgesteuerten Clusters 100 können ein oder mehrere virtuelle CAN Kommunikationskanäle emuliert werden. Es ist nun möglich, einen semi-virtuellen CAN Kommunikationskanal aus der Kombination von den an einem Applikationssubsystem beteiligten Rechnertasks der physikalischen CAN Cluster 101 und 103 und von den an demselben Applikationssubsystem beteiligten Rechnertasks der virtuellen CAN Kommunikationskanäle des Clusters 100 aufzubauen.

In dem zeitgesteuerten Kommunikationssystem 100 können auch mehrere voneinander abgekapselte virtuelle Kommunikationskanäle mit a priori bekanntem Zeitverhalten aufgebaut werden. Die in einem zeitgesteuerten System mögliche statische Zuordnung der Bandbreite an die einzelnen virtuellen Kommunikationskanäle stellt sicher, dass das zeitliche Verhalten jedes virtuellen Kommunikationskanals *a priori* bestimmt werden kann und keine unbeabsichtigten Wechselwirkungen zwischen unterschiedlichen Kanälen existieren können. Falls erforderlich können ein oder mehrere dieser virtuellen Kommunikationskanäle für-den Transport von Ereignisnachrichten konfiguriert werden. In einem solchen Fall muss die Middleware 251 eines Rechnerknotens die in [1] beschriebene Pufferverwaltung vornehmen.

Wenn in einem Applikationssubsystem, z.B. im Task 234 von Rechnerknoten 111 des Applikationssubsystems 360 ein Fehler auftritt, z.B. eine Endlosschleife, so bricht das Betriebssystem 261 den Task 234 ab ohne die Funktion von Task 233, der dem Applikationssubsystem 370 angehört, zu beeinträchtigen. Wenn der Task 234 mehr als die spezifizierte Anzahl von Nachrichten auf den CAN Bus 101 ausgeben will und damit die Kommunikation am CAN Bus 101 behindert, so bricht das Betriebssystem im Rechnerknoten 111 den Task 234 ebenfalls ab. In beiden Fällen schickt das Betriebssystem des Rechnerknotens 111 eine Fehlermeldung zu einem Diagnoserechner 151.

Um die Kommunikation zum Diagnoserechner 151 von der Echtzeitkommunikation innerhalb eines Applikationssubsystem im Zeit- und Wertebereich strikt zu trennen, wird allen Tasks des verteilten Multiclusterechtzeitsystems der Zugriff auf einen einheitlichen virtuellen abgekapselten Kommunikationskanal zu dem Diagnoserechner 151 ermöglicht. Durch die Abkapselung des virtuellen Kommunikationskanals zum Diagnoserechner wird erreicht, dass selbst im Fehlerfall wenn viele Diagnosenachrichten zu erwarten sind, das Zeitverhalten der Kommunikation innerhalb der Echtzeitapplikation nicht gestört wird.

Die Bereitstellung eines virtuellen abgekapselten Kommunikationskanal zu dem Diagnoserechner ermöglicht es, bereits vor dem Auftreten eine Fehlers, wenn z.B. der Inhalt einer Nachricht im Zeit oder Wertebereich von dem Normalzustand abweicht, *(out-of-norm)* eine *out-of-norm Diagnosenachricht* an den Diagnoserechner zu senden ohne befürchten zu müsssen, dass die Echtzeitkommunikation innerhalb der Applikationssubsysteme durch zu viele Diagnosenachrichten leidet. Wenn der Diagnosekanal überlastet wird, so werden nur die Diagnosenachrichten verzögert, der Echtzeitbetrieb bleibt unbeeinflusst. Der Diagnoserechner kann die *out-of-norm Diagnosenachricht* während des Betriebs on-line auswerten um frühzeitig einen Hinweis auf einen Fehler in einer austauschbaren Komponente zu eruieren.

Die zeitliche Isolation der virtuellen Kommunikationskanäle im Bereich von zeitgesteuerten Kommunikationssystemen wird dadurch erreicht, dass jedem virtuellen Kommunikationskanal eine *a priori* festgelegte dedizierte Zeitscheibe des physikalischen Kommunikationskanals zugewiesen wird. Im Bereich von ereignisgesteuerten Protokollen, wie z.B., physikalisches CAN, muss die Middelware 251 erzwingen, dass der Applikationstask 234 seine zeitliche Spezifikation einhält. Für jeden quasi-virtuellen Kommunikationskanal muss *a priori* überprüft werden, ob die spezifizierte maximale Transportzeit eingehalten werden kann, wenn alle Rechnerknoten des Clusters die spezifizierte maximale Anzahl von Nachrichten senden. Eine solche Analyse entspricht dem Stand der Technik[4].

### Die vorliegende Erfindung bringt folgende wirtschaftliche Vorteile:

**Kostenersparnis in der Hardware**: Durch die Integration von Funktionen in wenigen ECU wird die Anzahl der ECUs und die Anzahl der Kabel und damit die Kosten reduziert.

**Erhöhung der Zuverlässigkeit**: Durch die Reduktion der Verkabelung und der damit verbundenen Reduktion der Anzahl der Kontakte wird die Zuverlässigkeit erhöht.

**Vereinfachung der Programmierung:** Durch die Bereitstellung eines hardwareclusterübergreifenden einheitlichen virtuellen Kommunikationssystems wird die Programmierung erleichtert.

Integration von Legacy Software: Durch die Bereitstellung von im Bereich der Anwendungen weit verwendeten Kommunikationsprotokollschnittstellen (z.B. CAN) kann bestehende Software ohne Neuprogrammierung in die neue Architektur integriert werden.

**Flexibilität**: Die wechselseitige Unabhängigkeit der virtuellen Cluster und die in diesen virtuellen Clustern realisierte Broadcastadressierung unterstützt eine flexible Ressourcennutzung.

**Schutz von Intellectual Property (IP)**: Die Applikationssoftwaremodule 234 können in der Form von compilierten Programmen zum Schutz des IP des Programmauthors in einen Knoten integriert werden. Ein fehlerhaftes Verhalten eines Programms wird durch die Middelware 251 erkannt.

Da mittels der Erfindung an der Schnittstelle zwischen Task und Kommunikationssystem ein bestehendes Protokoll (z.B. CAN) virtuell nachgebildet werden kann, kann der Objektcode eines Tasks unverändert in ein neues System übernommen werden. Das im Task versteckte Know How braucht im Rahmen der Portierung eines Tasks nicht offengelegt werden.

Reduktion der Wartungskosten: Durch die on-line Verarbeitung von out-of-norm Diagnosenachrichten können Komponentenfehler frühzeitig erkannt und Wartungskosten reduziert werden.

## Patentansprüche

1. Verfahren zur Übertragung von Nachrichten in einem verteilten zeitgesteuerten Echtzeitcomputersystem (100), welches aus einer Vielzahl von Rechnerknoten besteht, wobei jeder Rechnerknoten einem oder mehreren physikalischen Clustern (101, 102, 103, 104) angehört, und wo in unterschiedüchen Clustern unterschiedliche Kommunikationsprotokolle eingesetzt werden können, und wo die Kommunikation zwischen zwei unterschiedlichen Clustern über Rechnerknoten realisiert wird, die physikalisch Mitglied der beiden zu verbindenden Cluster sind, sogenannten physikalischen Gateways (111, 112, 113, 114), und wo mehrere Untermengen der Rechnerknoten mehrere nahezu autonome Applikationssubsysteme (360) bilden, wobei die Rechnerknoten einer Untermenge unterschiedlichen Clustern angehören können,
losgelöst von der physikalischen Multiclusternetzwerkstruktur eine virtuelle Netzwerkstruktur mit einem oder mehreren virtuellen Kommunikationskanälen aufgebaut wird, **dadurch gekennzeichnet, dass** den Rechnerknoten des verteilten Applikationssubsystems je mindestens ein virtueller Kommunikationskanal mit einem einheitlichen die Clustergrenzen überschreitenden Namensraum zur Verfügung gestellt wird, innerhalb welchen Kommunikationskanals ein einheitliches Kommunikationsprotokoll mit a priori bekannten Echtzeiteigenschaften realisiert ist und innerhalb welchen Namensraumes eine Broadcast-Kommunikation unterstützt wird.

2. Verfahren nach Anspruch 1, **dadurch gekennzeichnet, dass** in einem Rechnerknoten mehrere Tasks realisiert sind, die unterschiedlichen verteilten Applikationssubsystemen zugeordnet und voneinander isoliert sind, und wo allen Tasks eines bestimmten verteilten Applikationssubsystems, auch wenn sie sich in unterschiedlichen Rechnerknoten und möglicherweise in unterschiedlichen Clustern befinden, ein einheitlicher virtueller Kommunikationskanal mit einer einheitlichen Kommunikationsprotokoll-schnittstelle zugewiesen wird.

3. Verfahren nach Anspruch 1 oder 2, **dadurch gekennzeichnet, dass** verschiedene virtuelle Kommunikationskanäle voneinander derart isoliert werden, dass eine Änderung im Verkehrsaufkommen in einem virtuellen Kommunikationskanal keine Auswirkungen auf das zeitliche Verhalten des Verkehrs in den anderen virtuellen Kommunikationskanälen hat.

4. Verfahren nach einem der Ansprüche 1 bis 3, **dadurch gekennzeichnet, dass** mehrere voneinander abgekapselte virtuelle Kommunikationskanäle für den Transport von Ereignisnachrichten bereitgestellt werden.

5. Verfahren nach einem der Ansprüche 1 bis 4, **dadurch gekennzeichnet, dass** der Datenaustausch zwischen unterschiedlichen virtuellen Kommunikationskanälen über ein virtueller Gateway erfolgt.

6. Verfahren nach einem der Ansprüche 1 bis 5, **dadurch gekennzeichnet, dass** einer oder mehrere der virtuellen Kommunikationskanäle die CAN Kommunikationsprotokollschnittstelle emuliert.

7. Verfahren nach einem der Ansprüche 1 bis 6, **dadurch gekennzeichnet, dass** die Rechnerknoten von einem oder mehreren zentralen zeitgesteuerten Clustern Gatewayverbindungen zu den Rechnerknoten in einem oder mehreren physikalischen CAN Clustern herstellen und wo innerhalb der zeitgesteuerten Cluster ein oder mehrere virtuelle CAN Kommunikationskanäle emuliert werden, und wo ein semi-virtueller CAN Kommunikationskanal aus der Kombination von den an einem Applikationssubsystem beteiligten Rechnertasks eines oder mehrerer physikalischer CAN Cluster und von den an demselben Applikationssubsystem beteiligten Rechnertasks eines oder mehrerer virtueller CAN Kommunikationskanäle besteht.

8. Verfahren nach einem der Ansprüche 1 bis 7, **dadurch gekennzeichnet, dass** alle Rechnertasks der Rechnerknoten ihre Diagnosenachrichten über einen einheitlichen virtuellen Diagnosekanal an einen Diagnoserechner (151) senden können.

9. Verfahren nach einem der Ansprüche 1 bis 8, **dadurch gekennzeichnet, dass** die Rechnertasks bereits vor dem Auftreten eines Fehlers out-of-norm Diagnosenachrichten über den virtuellen Diagnosekanal an den Diagnoserechner (151) senden.

10. Verteiltes zeitgesteuertes Echtzeitcomputersystem (100), welches aus einer Vielzahl von Rechnerknoten besteht, wobei jeder Rechnerknoten einem oder mehreren physikalischen Clustern (101,102,103,104) angehört, und wo in unterschiedlichen Clustern unterschiedliche Kommunikationsprotokolle eingesetzt werden können, und wo die Kommunikation zwischen zwei unterschiedlichen Clustern über Rechnerknoten realisiert ist, die physikalisch Mitglied der beiden zu verbindenden Cluster sind, sogenannten physikalischen gateways (111, 112, 113, 114), und wo mehrere Untermengen der Rechnerknoten mehrere nahezu autonome Applikationssubsysteme (360) bilden, wobei die Rechnerknoten einer Untermenge unterschiedlichen Clustern angehören können, losgelöst von der physikalischen Multiclusternetzwerkstruktur eine virtuelle Netzwerkstruktur mit einem oder mehreren virtuellen Kommunikationskanälen aufgebaut ist, **dadurch gekennzeichnet, dass** den Rechnerknoten das verteilten Applikationssubsystems je mindestens ein virtueller Kommunikationskanal mit einem einheitlichen die Clustergrenzen überschreitenden Namensraum zur Verfügung gestellt wird, innerhalb welchen Kommunikationskanals ein einheitliches Kommunikationsprotokoll mit a priori bekannten Echtzeiteigenschaften realisiert ist und innerhalb welchen Namensraumes eine Broadcast-Kommunikation unterstützt wird.

11. Echtzeitsystem nach Anspruch 10, **dadurch gekennzeichnet, dass** in einem Rechnerknoten mehrere Tasks realisiert sind, die unterschiedlichen verteilten Applikationssubsystemen zugeordnet und voneinander isoliert sind, und wo allen Tasks eines bestimmten verteilten Applikationssubsystems, auch wenn sie sich in unterschiedlichen Rechnerknoten und möglicherweise in unterschiedlichen Clustern befinden, ein einheitlicher virtueller Kommunikationskanal mit einer einheitlichen Kommunikationsprotokoll-schnittstelle zugewiesen wird.

12. Echtzeitsystem nach Anspruch 10 oder 11, **dadurch gekennzeichnet, dass** verschiedenen virtuellen Kommunikationskanäle voneinander derart isoliert werden, dass eine Änderung im Verkehrsaufkommen in einem virtuellen Kommunikationskanal keine Auswirkungen auf das zeitliche Verhalten des Verkehrs in den anderen virtuellen Kommunikationskanälen hat.

13. Echtzeitsystem nach einem der Ansprüche 10 bis 12, **dadurch gekennzeichnet, dass** mehrere voneinander abgekapselte virtuelle Kommunikationskanäle für den Transport von Ereignisnachrichten bereitgestellt werden.

14. Echtzeitsystem nach einem der Ansprüche 10 bis 13, **dadurch gekennzeichnet, dass** der Datenaustausch zwischen unterschiedlichen virtuellen Kommunikationskanälen über ein virtuelles Gateway erfolgt.

15. Echtzeitsystem nach einem der Ansprüche 10 bis 14, **dadurch gekennzeichnet, dass** einer oder mehrere der virtuellen Kommunikationskanäle die CAN Kommunikationsprotokollschnittstelle emuliert.

16. Echtzeitsystem nach einem der Ansprüche 10 bis 15, **dadurch gekennzeichnet, dass** die Rechnerknoten von einem oder mehreren zentralen zeitgesteuerten Clustern Gatewayverbindungen zu den Rechnerknoten in einem oder mehreren physikalischen CAN Clustern herstellen und wo innerhalb der zeitgesteuerten Cluster ein oder mehrere virtuelle CAN Kommunikationskanäle emuliert werden, und wo ein semi-virtueller CAN Kommunikationskanal aus der Kombination von den an einem Applikationssubsystem beteiligten Rechnertasks eines oder mehrerer physikalischer CAN Cluster und von den an demselben Applikationssubsystem beteiligten Rechnertasks eines oder mehrerer virtueller CAN Kommunikationskanäle besteht.

17. Echtzeitsystem nach einem der Ansprüche 10 bis 16, **dadurch gekennzeichnet, dass** alle Rechnertasks der Rechnerknoten ihre Diagnosenachrichten über einen einheitlichen virtuellen Diagnosekanal an einen Diagnoserechner (151) senden können.

18. Echtzeitsystem nach einem der Ansprüche 10 bis 17, **dadurch gekennzeichnet, dass** die Rechnertasks bereits vor dem Auftreten eines Fehlers out-of-norm Diagnosenachrichten über den virtuellen Diagnosekanal an den Diagnoserechner (151) senden.

## Claims

1. Method of transferring messages in a distributed time-controlled real-time computer system (100) consisting of a plurality of computer nodes of which each computer node belongs to one or more physical clusters, different communication protocols being used in different clusters and the communication between two different clusters being effected via computer nodes which are physically a member of the two clusters to be interconnected, so-called physical gateways (101, 112, 113, 114), and wherein a plurality of subsets of the computer nodes form a plurality of almost autonomous application subsystems (360), it being possible for the computer node of a subset to belong to different clusters, and, dissociated from the physical multicluster network structure, a virtual network structure having one or more virtual communication channels is set up, **characterized in that** at least one virtual communication channel having a uniform name space crossing the cluster borders is made available for the computer nodes of the distributed application subsystem, within which communication channel a uniform communication protocol having *a priori* known real-time properties is realized and within which name space broadcast communication is supported.

2. A method as defined in claim 1, **characterized in that** in a computer node several tasks are realized which are assigned to different distributed application subsystems and are isolated from each other, wherein a uniform virtual communication channel having a uniform communication protocol interface is assigned to all tasks of a specific distributed application subsystem, even if they are located in different computer nodes and possibly in different clusters.

3. A method as defined in claim 1 or claim 2, **characterized in that** various virtual communication channels are isolated from each other in such a manner that any change in the traffic volume in a virtual communication channel has no effect on the temporal behavior of the traffic in the other virtual communication channels.

4. A method as defined in any one of claims 1 to 3, **characterized in that** a plurality of virtual communication channels encapsulated from each other are provided for the transfer of event messages.

5. A method as defined in any one of claims 1 to 4, **characterized in that** the data exchange between different virtual communication channels is carried out via a virtual gateway.

6. A method as defined in any one of claims 1 to 5, **characterized in that** one or more of the virtual communication channels emulates the CAN communication protocol interface.

7. A method as defined in any one of claims 1 to 6, **characterized in that** the computer nodes of one or more central time-controlled clusters set up gateway connections to the computer nodes in one or more physical CAN clusters wherein, within the time-controlled clusters, one or more virtual CAN communication channels are emulated and wherein a semi-virtual CAN communication channel consists of the combination of the computer tasks of one or more physical CAN clusters that participate in an application subsystem and the computer tasks of one or more virtual CAN communication channels that participate in the same application subsystem.

8. A method as defined in any one of claims 1 to 7, **characterized in that** all computer tasks of the computer nodes can send diagnosis messages via a uniform virtual diagnosis channel to a diagnosis computer (151).

9. A method as defined in any one of claims 1 to 8, **characterized in that** the computer tasks send diagnosis messages through the virtual diagnosis channel to the diagnosis computer (151) prior to the occurrence of an "out-of-norm" error.

10. A distributed time-controlled real-time computer system (100), consisting of a plurality of computer nodes of which each computer node belongs to one or more physical clusters, different communication protocols being used in different clusters and the communication between two different clusters being effected via computer nodes which are physically a member of the two clusters to be interconnected, so-called physical gateways (101, 112, 113, 114), and wherein a plurality of subsets of the computer nodes form a plurality of almost autonomous application subsystems (360), it being possible for the computer node of a subset to belong to different clusters, and, dissociated from the physical multicluster network structure, a virtual network structure having one or more virtual communication channels is set up, **characterized in that** at least one virtual communication channel having a uniform name space crossing the cluster borders is made available for the computer nodes of the distributed application subsystem, within which communication channel a uniform communication protocol having *a priori* known real-time properties is realized and within which name space broadcast communication is supported.

11. A real-time system as defined in claim 10, **characterized in that** in a computer node several tasks are realized which are assigned to different distributed application subsystems and are isolated from each other, wherein a uniform virtual communication channel having a uniform communication protocol interface is assigned to all tasks of a specific distributed application subsystem, even if they are located in different computer nodes and possibly in different clusters.

12. A real-time system as defined in claim 10 or claim 11, **characterized in that** various virtual communication channels are isolated from each other in such a manner that any change in the traffic volume in a virtual communication channel has no effect on the temporal behavior of the traffic in the other virtual communication channels.

13. A real-time system as defined in any one of claims 10 to 12, **characterized in that** a plurality of virtual communication channels encapsulated from each other are provided for the transfer of event messages.

14. A real-time system as defined in any one of claims 10 to 13, **characterized in that** the data exchange between different virtual communication channels is carried out via a virtual gateway.

15. A real-time system as defined in any one of claims 10 to 14, **characterized in that** one or more of the virtual communication channels emulates the CAN communication protocol interface.

16. A real-time system as defined in any one of claims 10 to 15, **characterized in that** the computer nodes of one or more central time-controlled clusters set up gateway connections to the computer nodes in one or more physical CAN clusters wherein, within the time-controlled clusters, one or more virtual CAN communication channels are emulated and wherein a semi-virtual CAN communication channel consists of the combination of the computer tasks of one or more physical CAN clusters that participate in an application subsystem and the computer tasks of one or more virtual CAN communication channels that participate in the same application subsystem.

17. A real-time system as defined in any one of claims 10 to 16, **characterized in that** all computer tasks of the computer nodes can send their diagnosis messages through a uniform virtual diagnosis channel to a diagnosis computer (151).

18. A real-time system as defined in any one of claims 10 to 17, **characterized in that** the computer tasks send diagnosis messages through the virtual diagnosis channel to the diagnosis computer (151) prior to the occurrence of an out-of-norm error.

## Revendications

1. Procédé pour la transmission de messages dans un système temps réel temporisé distribué (100), lequel se compose d'une multitude de noeuds d'ordinateurs, chaque noeud d'ordinateurs appartenant à une ou plusieurs grappes physiques (101, 102, 202, 104), et où dans différentes grappes peuvent être employés différents protocoles de communication, et où la communication entre deux grappes différentes est réalisée par des noeuds d'ordinateurs, qui sont physiquement membres des deux grappes à relier, appelées passerelles physiques (161, 112, 113, 114), et où plusieurs sous-ensembles des noeuds d'ordinateurs constituent plusieurs sous-systèmes d'application (364) presque autonomes, les noeuds d'ordinateurs pouvant appartenir à un sous-ensemble de différents grappes, où, déclenchée par la structure physique en réseau multigrappe, est établie une structure virtuelle en réseau avec un ou plusieurs canaux virtuels de communication, **caractérisé en ce qu'**est mis à disposition des noeuds d'ordinateurs du sous-système d'application distribué au moins respectivement un canal virtuel de communication avec un espace nominal unitaire dépassant les limites de la grappe, à l'intérieur de ce canal de communication est réalisé un protocole unitaire de communication avec des propriétés de temps réel connues à priori et à l'intérieur de cet espace nominal est assistée une communication par diffusion générale.

2. Procédé selon la revendication 1, **caractérisé en ce que** dans un noeud d'ordinateurs sont réalisées plusieurs tâches, qui sont affectées à différents sous-systèmes d'application distribués et isolées les unes des autres, et où à toutes les tâches d'un certain sous-système d'application distribué, même si elles se trouvent dans des noeuds d'ordinateurs différents et éventuellement dans des grappes différentes, est affecté un canal virtuel de communication unitaire avec une interface unitaire de protocole de communication.

3. Procédé selon la revendication 1 ou 2, **caractérisé en ce que** les différents canaux virtuels de communication sont isolés les uns des autres de façon à ce qu'une modification du trafic dans un canal virtuel de communication n'ait aucune incidence sur le comportement temporel du trafic dans les autres canaux virtuels de communication.

4. Procédé selon l'une des revendications 1 à 3, **caractérisé en ce que** plusieurs canaux virtuels isolés les uns des autres sont mis à disposition pour le transport de messages événementiels.

5. Procédé selon l'une des revendications 1 à 4, **caractérisé en ce que** l'échange de données entre différents canaux virtuels de communication s'effectue par une passerelle virtuelle.

6. Procédé selon l'une des revendications 1 à 5, **caractérisé en ce qu'**un ou plusieurs des canaux virtuels de communication émule l'interface de protocole de communication CAN.

7. Procédé selon l'une des revendications 1 à 6, **caractérisé en ce que** les noeuds d'ordinateurs d'une ou de plusieurs grappes centrales temporisées créent des liaisons passerelle vers les noeuds d'ordinateurs dans une ou plusieurs grappes CAN physiques et où à l'intérieur de la grappe temporisée un ou plusieurs canaux virtuels CAN sont émulés, et où un canal semi virtuel de communication CAN se compose de la combinaison de tâches d'ordinateur participant à un sous-système d'application d'une ou plusieurs grappes CAN physiques et de tâches d'ordinateur participant au même sous-système d'application d'un ou de plusieurs canaux virtuels de communication CAN.

8. Procédé selon l'une des revendications 1 à 7, **caractérisé en ce que** toutes les tâches d'ordinateur du noeud d'ordinateurs peuvent envoyer leurs messages de diagnostic par un canal unitaire virtuel de diagnostic à un ordinateur de diagnostic (151).

9. Procédé selon l'une des revendications 1 à 8, **caractérisé en ce que** les tâches d'ordinateur envoient déjà avant l'apparition d'une erreur hors norme « out-of-norm » des messages de diagnostic par le canal unitaire virtuel de diagnostic à l'ordinateur de diagnostic (151).

10. Système d'ordinateurs temps réel temporisé distribué (100), lequel se compose d'une multitude de noeuds d'ordinateurs, chaque noeud d'ordinateurs appartenant à un ou plusieurs grappes physiques (101, 102, 103, 104), et où dans différentes grappes peuvent être employés différents protocoles de communication, et où la communication entre deux grappes différentes est réalisée par des noeuds d'ordinateurs, qui sont physiquement membres des deux grappes à relier, appelées passerelles physiques (111, 112, 113, 114), et où plusieurs sous-ensembles de noeuds d'ordinateurs constituent plusieurs sous-systèmes d'application presque autonomes (360), les noeuds d'ordinateurs d'un sous-ensemble pouvant appartenir à différentes grappes ; où, déclenchée par la structure physique en réseau multigrappe, est établie une structure virtuelle en réseau avec un ou plusieurs canaux virtuels de communication, **caractérisé en ce qu'**est mis à disposition des noeuds d'ordinateurs du sous-système d'application distribué au moins respectivement un canal virtuel de communication avec un espace nominal unitaire dépassant les limites de la grappe, où à l'intérieur de ce canal de communication est réalisé un protocole unitaire de communication avec des propriétés de temps réel a priori connues et à l'intérieur de cet espace nominal est assistée une communication par diffusion générale.

11. Système temps réel selon la revendication 10, **caractérisé en ce que** dans un noeud d'ordinateurs sont réalisées plusieurs tâches, qui sont affectées à différents sous-systèmes d'application distribués et isolées les unes des autres, et où à toutes les tâches d'un certain sous-système d'application distribué, même si elles se trouvent dans des noeuds d'ordinateurs différents et éventuellement dans des grappes différentes, est affecté un canal virtuel de communication unitaire avec une interface unitaire de protocole de communication.

12. Système temps réel selon la revendication 10 ou 11, **caractérisé en ce que** les différents canaux virtuels de communication sont isolés les uns des autres de façon à ce qu'une modification du trafic dans un canal virtuel de communication n'ait aucune incidence sur le comportement temporel du trafic dans les autres canaux virtuels de communication.

13. Système temps réel selon l'une des revendications 10 à 12, **caractérisé en ce que** plusieurs canaux virtuels isolés les uns des autres sont mis à disposition pour le transport de messages événementiels.

14. Système temps réel selon l'une des revendications 10 à 13, **caractérisé en ce que** l'échange de données entre différents canaux virtuels de communication s'effectue par une passerelle virtuelle.

15. Système temps réel selon l'une des revendications 10 à 14, **caractérisé en ce qu'**un ou plusieurs des canaux virtuels de communication émule l'interface de protocole de communication CAN.

16. Système temps réel selon l'une des revendications 10 à 15, **caractérisé en ce que** les noeuds d'ordinateurs d'une ou de plusieurs grappes centrales temporisés créent des liaisons de passerelle vers les noeuds d'ordinateurs dans une ou plusieurs grappes CAN physiques et où à l'intérieur de la grappe temporisée un ou plusieurs canaux virtuels CAN sont émulés, et où un canal semi virtuel de communication CAN se compose de la combinaison de tâches d'ordinateur participant à un sous-système d'application d'une ou de plusieurs grappes CAN physiques et de tâches d'ordinateur participant au même sous-système d'application d'un ou de plusieurs canaux virtuels de communication CAN.

17. Système temps réel selon l'une des revendications 10 à 16, **caractérisé en ce que** toutes les tâches d'ordinateur du noeud d'ordinateurs peuvent envoyer leurs messages de diagnostic par un canal unitaire virtuel de diagnostic à un ordinateur de diagnostic (151).

18. Système temps réel selon l'une des revendications 10 à 17, **caractérisé en ce que** les tâches d'ordinateur envoient déjà avant l'apparition d'une erreur hors norme « out-of-norm » des messages de diagnostic par le canal unitaire virtuel de diagnostic à l'ordinateur de diagnostic (151).
